# EUROPEAN PATENT APPLICATION

(11) **EP 2 266 785 A1**
(43) Date of publication of application: **29.12.2010**
(21) Application number: 09400030.4
(22) Date of filing: 22.06.2009
(51) Int. Cl.: B29C 70/38, B29C 70/54, B29C 70/34, B29C 31/08

(54) **Apparatus and method for taking up, positioning and draping dry textile fibre semi-finished products**

(71) Applicant: Eurocopter Deutschland GmbH, 86609 Donauwörth (DE)
(72) Inventor: Weimer, Christian, 81543 München (DE); Bätge, Nikolaus, 82041 Deisenhofen (DE); Göttinger, Marco, 81549 München (DE)
(74) Representative: GPI & Associés

(57) **Abstract**

The invention relates to an apparatus (10) for taking up, positioning and draping dry textile fibre semi-finished products (34) and comprises a housing (12) with an open housing side, a membrane (14) disposed inside the housing (12) and running parallel to the open housing side, which divides the housing (12) into a first upper chamber (18) and a second lower chamber (16), as well as at least one fluid guidance opening (22,24) disposed in the first chamber (18) for pressure control in the upper chamber and for supplying and removing a heatable fluid into the upper chamber (18). The membrane (14) is formed from a flexible and fluid-tight material and the membrane (14) comprises a plurality of suction heads (26) directed into the lower chamber (16), the suction heads (26) being connected via a flexibly configured suction line (30) guided through the upper chamber (18) to a vacuum shaft.

## Description

The invention relates to an apparatus for taking up, positioning and draping dry textile fibre semi-finished products according to claim 1 and a method for taking up, positioning and draping dry textile fibre semi-finished products according to claim 6.

It is known that at the present time, the handling and draping of dry textile fibre semi-finished products takes place manually. In this case, the activation of a binder takes place in a second separate step.

Vacuum gripping systems for dry textile fibre semi-finished products have been developed in the nationally promoted research project LuFo II, "ProCFK", "ProTex" part project, see A.S. Herrmann, M. Book, G. Ressler, J. Piepenbrock, Pro-CFK composite project, Proceedings of the DGLR Conference 2004, 041. A demonstrator was implemented which was able to show the handling of dry textile fibre semi-finished products. Automation of this technology was carried out on the Airbus by applying the gripping systems to a robot system.

Further gripping systems for chain-linking were developed with the Lower Saxony Project "AUTO-RTM", see also U. Ebert, AUTO-RTM, Concept for high-automated process chain for the production of RTM-compound-components in large series, 3rd International Symposium on Composites Manufacturing Technology for Aircraft Structures, Markenesse 2006.

Integration of real process chain elements into the circuit systems for binder activation and/or pressure control for reforming or targeted draping is not known.

Starting from the prior art specified above, it is the object of the invention to provide an apparatus and a method which allows the simplified handling and draping of dry textile fibre semi-finished products.

This object is achieved for the apparatus by the features of claim 1 and for the method by the features of claim 6.

The dependent claims form advantageous further developments of the invention.

The apparatus according to the invention for taking up, positioning and draping dry textile fibre semi-finished products comprises a housing with an open housing side, a membrane disposed inside the housing and running parallel to the open housing side, which divides the housing into a first chamber and a second chamber, as well as at least one fluid guidance opening disposed in the first chamber for pressure control in the second chamber and for supplying and removing a heatable fluid into the second chamber. The membrane dividing the housing into the first and second chamber is formed from a flexible and fluid-tight membrane and comprises a plurality of suction heads directed into the second chamber which are connected via flexibly configured suction lines guided through the first chamber to a vacuum source. By using the double chamber system according to the invention with flexible second chamber, it is now advantageously possible to achieve a deformation of a textile structure and at the same time achieve binder activation and stabilisation of a binder by means of the first chamber, e.g. by using a heatable fluid. Thus, the handling, draping and activation of a binder in one step is now made possible for the first time by the embodiment according to the invention. In contrast to the prior art, "manual handling" is no longer necessary. Further advantages are the reduction in specific production means due to the component-independent operating mode, the now-defined draping process, the reduction in process steps and process times due to the "inline" preform binder activation during handling of the layers and the capacity for automation and chain-linking.

In its side facing the second chamber, hereinafter designated as underside of the membrane, the membrane preferably has indentations aligned in the direction of the first chamber in the area of the suction heads. The formation of the indentations in the underside of the chamber in the area of the suction heads proves to be advantageous since the area to be evacuated is thereby configured to be enlarged in the area of the suction heads, thus ensuring improved take-up of the dry textile fibre semi-finished product.

According to a further embodiment of the invention, the membrane has local elevations and/or indentations in its underside. These local elevations and/or indentations form special draping zones, with the result that targeted draping is possible.

According to a further embodiment of the invention, the housing has a seal in the area of the open housing side. This has the effect of improved evacuation in the edge zone, i.e. the take-up and handing of the textile fibre semi-finished product is made easier.

The membrane is preferably made of an addition-cross-linking silicone rubber. The formation of the membrane from this is found to be advantageous since these materials have high extensibilities and temperature resistances.

According to the method according to the invention for taking up, positioning and draping dry textile fibre semi-finished products, the apparatus according to the invention is initially positioned above a textile fibre semi-finished product. The textile fibre semi-finished product is then taken up by producing a vacuum at the suction heads. In a following process step, the textile fibre semi-finished product is positioned above a mould core and in a subsequent process step the textile fibre semi-finished product is draped over the mould core. In a last step the binder activation takes place by supplying a heated fluid via the fluid guidance opening into the first chamber.

Further advantages, features and possible applications of the present invention are obtained from the following description in conjunction with the exemplary embodiment shown in the drawings.

The invention is described in detail hereinafter with reference to the exemplary embodiment shown in the drawing.

In the drawings:
Fig. 1 shows a schematic diagram of the apparatus according to the invention;
Fig. 2 shows a plan view of the underside of the membrane with the distributed suction heads;
Fig. 3 shows an enlarged view of a suction head from Fig. 2 and
Fig. 4 shows a schematic diagram of the functioning principle of the apparatus according to the invention.

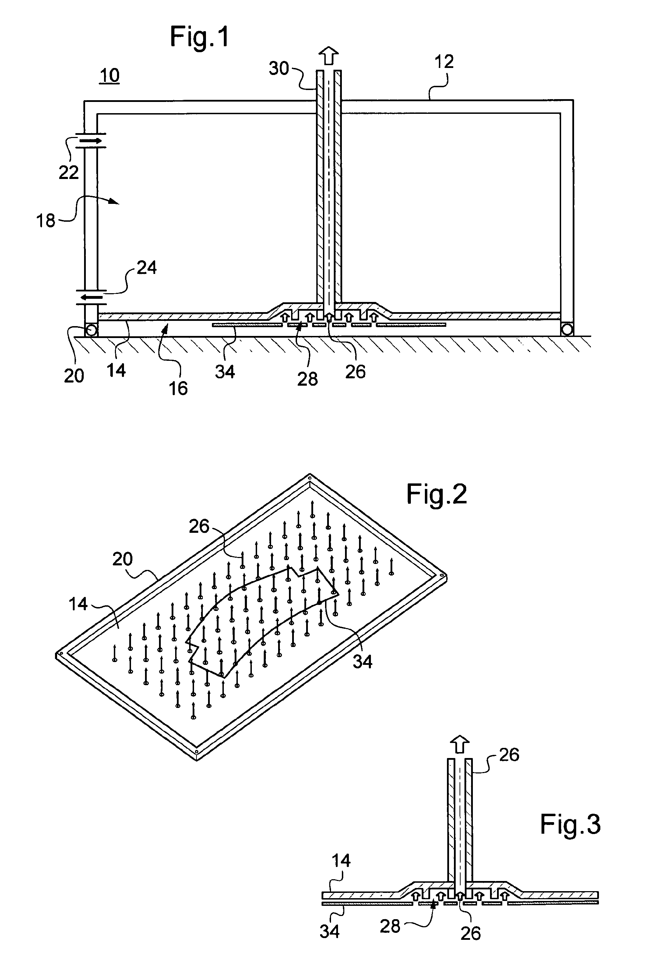

Figure 1 shows more or less schematically an apparatus designated overall with the reference numeral 10 for taking up, positioning and draping dry fibre semi-finished products 12.

The apparatus 10 substantially consists of a housing 12 with an open housing side and a membrane 14 disposed in the housing 12 which divides the housing 12 into a first upper chamber 16 and a second lower chamber 18. A peripheral seal 20 is disposed in the area of the open housing side.

Furthermore, the first chamber 16 has two fluid guidance openings 22, 24 for supplying and removing a heatable fluid. In addition to the supply and removal of heatable fluid, the openings 22, 24 additionally also sere for controlling pressure in the first chamber 16. The components required for pressure control such as, for example, pressure source, control and regulating unit etc. are not shown for reasons of clarity.

The membrane 14 is in this case made of an addition-cross-linking silicone rubber and is therefore flexible and fluid-tight and, as is particularly apparent from Fig. 2, has a plurality of suction heads 26 aligned into the second chamber 18 in its underside, i.e. in the side facing the second chamber 18. As is particularly apparent from Fig. 3, in the area of a suction head 26 on its underside the membrane 14 has an indentation 30 aligned in the direction of the first chamber 16.

The suction heads 26 are each operatively connected to a vacuum source via a suction line 30 guided through the first chamber 16 and configured to be flexible. The vacuum source was not shown in the present case for reasons of clarity.

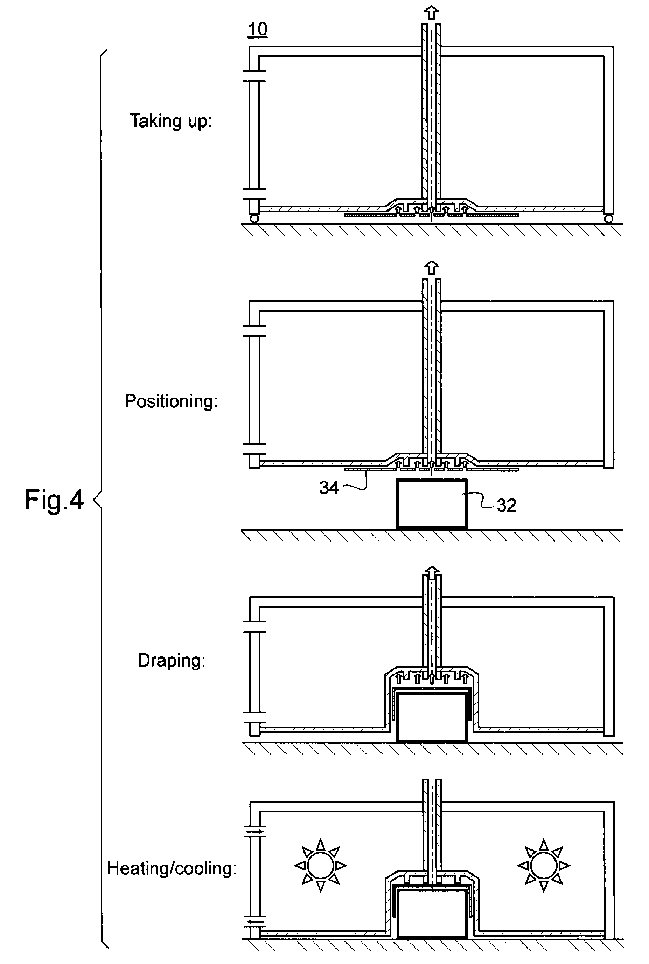

The function of the apparatus 10 according to the invention is shown in Fig. 4:
For taking up the textile fibre semi-finished product 12, the apparatus 10 is positioned over the textile fibre semi-finished product 34. Then a vacuum is generated via the suction line 30 in the area of the suction heads 26 and the indentations 30. By this means the textile fibre semi-finished product 34 is taken up and can be transported and positioned with the apparatus.

After positioning the textile fibre semi-finished product 12, e.g. over a mould core 32, draping of the textile fibre semi-finished product 12 takes place due to a corresponding pressure control in the first chamber 16.

In the following last step a heated fluid is supplied to the first chamber 16 for binder activation via the fluid supply openings 22, 24.

### REFERENCE LIST

- 10: Apparatus for taking up, positioning and draping
- 12: Housing
- 14: Membrane
- 16: First chamber
- 18: Second chamber
- 20: Seal
- 22: Fluid supply opening
- 24: Fluid supply opening
- 26: Suction head
- 28: Indentation
- 30: Suction line
- 32: Mould core
- 34: Fibre semi-finished product

## Claims

1. Apparatus (10) for taking up, positioning and draping dry textile fibre semi-finished products (34) comprising
- a housing (12) with an open housing side;
- a membrane (14) disposed inside the housing (12) and running parallel to the open housing side, which divides the housing (12) into a first chamber (16) and a second chamber (18), as well as
- at least one fluid guidance opening (22, 24) disposed in the first chamber (16) for pressure control in the second chamber and for supplying and removing a heatable fluid into the second chamber (18),
wherein the membrane (14) is formed from a flexible and fluid-tight material and the membrane (14) comprises a plurality of suction heads (26) directed into the second chamber (18) which are connected via flexibly configured suction lines (30) guided through the first chamber (16) to a vacuum source.

2. The apparatus according to claim 1,
**characterised in that** the membrane (14) has indentations (28) aligned in the direction of the first chamber (16) in the area of the suction heads (26).

3. The apparatus according to claim 1 or 2,
**characterised in that** the membrane (14) has local elevations and/or indentations.

4. The apparatus according to any one of the preceding claims,
**characterised in that** the housing (12) has a seal (20) in the area of the open housing side.

5. The apparatus according to any one of the preceding claims,
**characterised in that** the membrane is preferably made of an addition-cross-linking silicone rubber.

6. A method for taking up, positioning and draping dry textile fibre semi-finished products (34) according to any one of claims 1 to 5, comprising the process steps
- positioning the apparatus (10) above a textile fibre semi-finished product (34);
- taking up the textile fibre semi-finished product (34) by producing a vacuum at the suction heads (26);
- positioning the textile fibre semi-finished product (34) above a mould core (32);
- draping the textile fibre semi-finished product (34);
- binder activation by supplying a heated fluid via the fluid guidance opening (22, 24) into the first chamber (16).
